# EUROPÄISCHE PATENTSCHRIFT

(11) **EP 0 663 569 B1**
(45) Veröffentlichungstag und Bekanntmachung des Hinweises auf die Patenterteilung: **21.10.1998**
(21) Anmeldenummer: 95890008.6
(22) Anmeldetag: 12.01.1995
(51) Int. Cl.: F24D 17/00, F24D 3/08, F24D 11/00

(54) **Heizanlage, insbesondere Solaranlage**
Heating installation, in particular solar heating installation
Installation de chauffage, en particulier de chauffage solaire

(30) Priorität: 14.01.1994 AT 55/94
(43) Veröffentlichungstag der Anmeldung: 19.07.1995
(73) Patentinhaber: Bergmayr, Martin, Mag. Ing., 4111 Walding (AT)
(72) Erfinder: Bergmayr, Martin, Mag. Ing., 4111 Walding (AT)
(74) Vertreter: Hübscher, Heiner, Dipl.-Ing.

(56) Entgegenhaltungen:
- DE-A- 2 828 675
- DE-A- 3 902 113
- FR-A- 2 379 785
- FR-A- 2 391 431
- GB-A- 2 203 525

## Beschreibung

Die Erfindung bezieht sich auf eine Heizanlage, insbesondere Solaranlage, mit einem über eine Wärmequelle führenden Wärmeträgerkreislauf und einem Wasserspeicher, wobei der Wärmeträgerkreislauf eine Umwälzpumpe und einen im Speicherbehälter sich der Höhe nach erstreckenden, von oben nach unten durchströmten-Wärmetauscher umfaßt und der Speicherbehälter oberhalb des Wärmetauschers einen Bereitschaftsraum aufweist.

Bei den bekannten Solaranlagen oder Heizanlagen mit schwankendem Energieangebot sind die Wasserspeicher, die als Pufferspeicher oder auch unmittelbar als Brauchwasserspeicher dienen können, meist mit sich im unteren Höhenbereich des Speichers befindenden Wärmetauschern ausgestattet, um eine möglichst durchgehende Aufheizung des gesamten Speicherwassers zu erreichen, wobei der im Sonnenkollektor oder mittels einer anderen Wärmequelle aufgeheizte Wärmeträger den Wärmetauscher von oben nach unten durchströmt. Da nun auf Grund unterschiedlicher Sonneneinstrahlung oder ungleichmäßiger Energieangebote beträchtliche Temperaturschwankungen im Wärmeträgervorlauf auftreten und bei geringeren Vorlauftemperaturen durch eine Kreislaufunterbrechung die Gefahr einer Wasserspeicherrückkühlung zu vermeiden ist, kommt es nun zu einer recht unbefriedigenden Speichererwärmung und der Wärmenutzungsgrad bleibt gering, so daß es oft notwendig ist, den Heizeffekt durch parallel- oder seriengeschaltete Teilkreisläufe mit zusätzlichen Wärmetauschern und aufwendigen Regeleinrichtungen zu verstärken.

Gemäß der FR 23 91 431 A wurde auch schon eine Solarheizanlage vorgeschlagen, bei der in den Solarheizkreislauf zusätzliche Heizkörper, ein Speicherkessel, ein Brauchwasserbereiter u. dgl. parallel eingebunden sind, wobei der Brauchwasserbereiter einen Wärmetauscher aufnimmt, dessen Rohrschlange entlang einer sich abwärts verengenden Kegelfläche gewunden und von oben nach unten durchströmt ist. Dadurch kann zwar im oberen Bereich des Brauchwasserbereiters eine etwas größere spezifische Wärmeübertragung erreicht werden als im unteren Bereich, doch bleibt die erzielbare Wirkung wegen der geringen Leistungsunterschiede im Höhenverlauf des Wärmetauschers und wegen des Fehlens eines Bereitschaftsraumes oberhalb des Wärmetauschers ohne spürbaren Einfluß auf den Wärmenutzungsgrad der Heizanlage.

Der Erfindung liegt daher die Aufgabe zugrunde, diese Mängel zu beseitigen und eine Heizanlage der eingangs geschilderten Art zu schaffen, die sich bei verhältnismäßig einfachem Aufbau durch ihren besonders guten Wärmenutzungsgrad auszeichnet.

Die Erfindung löst diese Aufgabe dadurch, daß der Wärmetauscher in wenigstens zwei Höhenabschnitte unterteilt ist und einen oberen Tauscherteil größerer spezifischer Leistung und einen unteren Tauscherteil kleinerer spezifischer Leistung bildet und daß die Umwälzpumpe in Abhängigkeit von der Differenz zwischen Kollektortemperatur und Wärmetauscher-Rücklauftemperatur ein- und ausschaltbar und vorzugsweise im Sinne einer Drehzahlregelung in Abhängigkeit von der Wärmetauscher-Vorlauftemperatur ansteuerbar ist.

Die Erfindung geht von der Erkenntnis aus, daß Wasser an sich ein schlechter Wärmeleiter ist und sich in einem Wasserspeicher wegen der temperaturabhängigen Dichteunterschiede eine entsprechende Temperaturschichtung einstellt. Durch die beim Erwärmen von Wasser entstehende Konvektion steigt warmes Wasser auf und Wärme kann von einem Wärmetauscher in einen oberhalb des Wärmetauschers liegenden Speicherbereich transportiert werden. Eine Abkühlung dieses Speicherbereiches ist nicht mehr zu befürchten, da die Konvektion bei unterkühltem Wärmetauscher dann nur abwärts erfolgt und wegen der geringen Wärmeleitfähigkeit des Wassers kaum eine merkbare Wärmeleitung auftritt. Über den erfindungsgemäßen Wärmetauscher läßt sich daher das Wasser im oberhalb des Wärmetauschers freigehaltenen Bereitschaftsraum verhältnismäßig schnell und hoch aufheizen, da einerseits nur ein gegenüber dem Gesamtspeichervolumen geringeres Speichervolumen zu erwärmen ist und anderseits die volle Vorlauftemperatur zur Aufwärmung zur Verfügung steht, wobei zur erforderlichen Wärmenutzung der Wärmetauscher zweigeteilt und der für die Aufheizung des Bereitschaftsraumes eingesetzte obere Tauscherteil mit einer hohen spezifischen Leistung ausgestattet ist, d. h. er weist eine große Wärmetauscherfläche pro Höheneinheit des Behälters auf. Das erwärmte Speicherwasser steigt in Abhängigkeit von seiner Temperatur in den Bereitschaftsraum hoch und das über die Heizanlage zur Verfügung gestellte Energiepotential kann weitgehend zur raschen Aufwärmung des Speicherwassers im Bereitschaftsraum auf eine gewünschte Mindesttemperatur genutzt werden. Im unteren Tauscherteil wird die verbleibende Restwärme des Wärmeträgers an den unteren kälteren Bereich des Wasserspeichers abgegeben, so daß insgesamt ein ausgezeichneter Wirkungsgrad des Wärmeangebotes der Solaranlage od. dgl. gewährleistet ist. Um eine Speicherrückkühlung zu vermeiden, wird die Umwälzpumpe in Abhängigkeit von der Differenz zwischen Kollektortemperatur und Wärmetauscher-Rücklauftemperatur ein- und ausgeschaltet, welche Temperaturdifferenz Ja ein Maß für die Wärmeabgabe innerhalb des Speichers darstellt. Wird außerdem die Umwälzpumpe im Betrieb drehzahlgeregelt, kann über die Wärmeträger-Durchflußmenge auch bei Schwankungen des Wärmeangebotes für eine bestimmte Vorlauftemperatur und damit für eine entsprechende Energienutzung gesorgt werden. Ein geringeres Wärmeangebot senkt zwar zwangsweise die mögliche Energiegewinnung, doch bleibt durch die Drehzahlregelung nicht nur die Vorlauftemperatur hoch, sondern es verringert sich auch die Leistungsaufnahme der Umwälzpumpe wegen der geringeren Drehzahlen und dies kommt der Energiebilanz zugute.

Eine zweckmäßige Aufteilung des Speichervolumens und eine dazu geeignete Wärmetauscherauslegung ergeben sich dadurch, daß sich der obere Tauscherteil höchstens über ein Höhensechstel des Speicherbehälters erstreckt und etwa die Hälfte der gesamten Wärmetauscherfläche des Wärmetauschers besitzt, wobei vorzugsweise der Bereitschaftsraum zumindest das oberste Höhendrittel des Speicherbhälters einnimmt. Bei dieser Auslegung kommt es zur gewünschten vorrangigen Aufheizung des Bereitschaftsraumes, da durch die Konzentrierung der Wärmetauscherleistung auf den oberen Tauscherteil der Großteil der zur Verfügung stehenden Wärmemenge in diesem Tauscherteilbereich übertragen wird und für die verhältnismäßig schnelle Aufheizung des Bereitschaftsvolumens sorgt.

Eine aufwandsarme Konstruktion für den Wärmetauscher ergibt sich, wenn dieser aus einer schraubenlinienförmig gewundenen Rohrschlange besteht, deren Windungshöhe im oberen Tauscherteil kleiner als im unteren Tauscherteil ist, welche Windungsunterschiede zur gewünschten Leistungsaufteilung führen.

Um einen gleichmäßigen Aufwärmeffekt zu erreichen, gleicht der Flächeninhalt der Querschnittsfläche innerhalb der Windungen etwa dem der außerhalb der Windungen verbleibenden Querschnittsfläche, so daß größere radiale Ausgleichsströmungen innerhalb des Speicherbehälters vermieden werden und sich eine ruhige Konvektionsströmung ausbildet.

Besteht der Wärmetauscher aus einer Rohrschlange, die im oberen Tauscherteil über den Behälterquerschnitt spiralig und im unteren Tauscherteil über die Behälterhöhe schraubenlinienförmig gewunden ist, kann die Wärmetauscherleistung des oberen Tauscherteils weiter gesteigert und die Energiezufuhr im oberen Bereich intensiviert werden.

Um eine Verbesserung des Wärmeschichtungseffektes innerhalb des Wasserspeichers zu erreichen, kann eine den oberen Tauscherteil umgebende zylindrische Leitwand vorgesehen sein, die sich bis in den Bereitschaftsraum hinauf erstreckt. Diese Leitwand behindert im oberen Wärmetauscherbereich das aufgewärmte Speicherwasser an einer radialen Strömung, so daß die Aufwärtsbewegung verstärkt und der Bereich oberhalb der Leitwand vorrangig aufgeheizt wird. Auf Grund des kleineren, durch die Leitwand vom übrigen Speichervolumen abgetrennten Speichervolumens kommt es hier zu einer rascheren Erwärmung mit der gleichen Energiemenge, was außerdem die Möglichkeit bietet, den Bereitschaftsraum zu vergrößern bzw. den Wärmetauscher tiefer beginnen zu lassen, da dennoch die Wärme rasch nach oben abgeführt werden kann. Die Leitwand endet unten mit dem oberen Tauscherteil, so daß durch den unteren Tauscherteil dann bei entsprechend niederen Wärmetauschertemperaturen das Speicherwasser in den unteren Speicherbereichen erwärmt und nicht durch die Leitwand in die heißeren Zonen abgeführt wird. Außerdem kann bei der Aufwärmung des Speicherwassers von einem entsprechend höheren Temperaturniveau ausgegangen werden, wodurch höhere Endtemperaturen für das Bereitschaftsraumvolumen zu erreichen sind.

Ein besserer Schichtungseffekt entsteht auch, wenn die Rohrschlange des oberen Tauscherteiles unter Freilassung eines Strömungskanals mit einem Leitrohr umgeben ist, das am unteren Ende in ein sich bis zum unteren Grenzbereich des Bereitschaftsraumes erstreckendes Zulaufrohr und am oberen Ende in ein in den Bereitschaftsraum hochragendes Auslaufrohr übergeht. Hier wird bei gegenüber dem Speicherwasser höherer Wärmeträgertemperatur Speicherwasser im Gegenstrom zum Wärmeträger durch das Leitrohr in den Bereitschaftsraum hochsteigen, was wiederum die gewünschte vorrangige Aufheizung des Bereitschaftsvolumens mit sich bringt.

In vorteilhafter Weise kann die Rohrschlange des Wärmetauschers aus einem Doppelrohr bestehen, wobei das eine Teilrohr an den Wärmeträgerkreislauf und das andere Teilrohr an einen eigenen Heizkreislauf angeschlossen sind. Dadurch kann neben dem Wärmeträgerkreislauf Heizwasser aus einem Heizkessel od. dgl. zum zusätzlichen Aufheizen des Speicherwassers verwendet werden, wobei eine gegenseitige Beeinflussung der Heizkreise erreichbar ist. Die Teilrohre können als koaxiales Doppelrohr oder auch als achsparallel verlaufendes Rohrpaar zusammengesetzt sein, so daß sich durch eine geeignete Rohrgestaltung die gewünschten Wärmeübertragungsverhältnisse berücksichtigen lassen.

Günstig ist es weiters, wenn der Speicherbehälter als Pufferspeicher für einen Brauchwasserspeicher od. dgl. dient, wobei der Wärmetauscher im Ringraum zwischen Brauchwasserspeicher und Speicherbehälter verlegt ist. Damit kann der korrosionssichere Behälter für den Brauchwasserspeicher kleiner gebaut werden und die Zwischenspeicherung des Brauchwassers bleibt kürzer. Durch einen weit nach unten reichenden Behälter und die wegen des unteren Kaltwassereintrittes tieferen Temperaturen im unteren Behälterbereich kommt es zudem zu einer guten Speicherwasserschichtung. Da der Pufferspeicher keines Korrosionsschutzes bedarf, kann er ohne wesentlichen Mehraufwand vergrößert und damit das Gesamtenergie-Speichervermögen erhöht werden. Der Wärmetauscher selbst ist innerhalb des Pufferspeichers vor Verkalken und Verschmutzen weitgehend geschützt, er braucht ebenfalls nicht korrosionssicher zu sein und es ist, wie bei anderen erfindungsgemäßen Speicherbehältern auch, nur eine Pumpe für den Wärmeträgerkreislauf notwendig.

In der Zeichnung ist der Erfindungsgegenstand rein schematisch veranschaulicht, und zwar zeigen
- Fig. 1: eine erfindungsgemäße Solaranlage im Anlagenschema und die
- Fig. 2 bis 4: drei Ausführungsvarianten des erfindungsgemäßen Wasserspeichers dieser Anlage.

Eine Solaranlage 1 weist einen Wärmeträgerkreislauf 2 auf, der von einem Sonnenkollektor 3 über eine Vorlaufleitung 2a zu einem Wärmetauscher 4 und über eine Rücklaufleitung 2b, in die eine Umwälzpumpe 5 eingebunden ist, zurück zum Sonnenkollektor 3 führt. Der Wärmetauscher 4 ist in einem Wasserspeicher 6 eingesetzt, wo er sich von unten nur über einen Teil der Höhe erstreckt und von oben nach unten durchströmt wird.

Um den Speicher rasch auf eine gewünschte Mindesttemperatur aufheizen zu können, weist der Wasserspeicher 6 oberhalb des Wärmetauschers 4 einen Bereitschaftsraum 7 auf, der etwa ein Höhendrittel des Speicherbehälters 8 einnimmt und gegebenenfalls mit einer Zusatzheizung 9 ausgestattet sein kann, die für eine Erwärmung des Wasserspeichers 6 über das von der Solaranlage 1 erreichbare Temperaturniveau hinaus notwendig wäre. Der Wärmetauscher 4 ist der Höhe nach zweigeteilt und bildet einen oberen Tauscherteil 4a und einen unteren Tauscherteil 4b, wobei der obere Tauscherteil 4a eine höhere und der untere Tauscherteil 4b eine niedrigere Übertragungsleistung aufweisen. Zur Regelung des Wärmeträgerkreislaufes 2 gibt es einen Temperaturfühler 10 für den Sonnenkollektor 3, einen Temperaturfühler 11 für den Wärmetauschervorlauf 2a und einen Temperaturfühler 12 für den Wärmetauscherrücklauf 2b. In Abhängigkeit von der Temperaturdifferenz zwischen Kollektortemperatur und Rücklauftemperatur wird die Umwälzpumpe 5 ein- und ausgeschaltet, um eine Rückkühlung des Speicherinhalts zu vermeiden, und außerdem wird die Umwälzpumpe 5 im Sinne einer Drehzahlregelung angesteuert, so daß je nach Wärmeangebot die Durchflußmenge zum Einhalten einer bestimmten Vorlauftemperatur regelbar ist.

Der Wärmetauscher 4 besteht aus einer schraubenlinienförmig gewundenen Rohrschlange 13, deren Windungshöhe im oberen Tauscherteil 4a geringer ist als im unteren Tauscherteil 4b, so daß die gewünschte Leistungsaufteilung erzielt wird. Der durch den Wärmetauscher strömende Wärmeträger heizt nun vorrangig im oberen Tauscherteil 4a das hier geschichtete Speicherwasser intensiv auf, das konvektionsbedingt hochsteigt und im Bereitschaftsraum 7 gespeichert wird. Die Restwärme wird im unteren Tauscherteil 4b an die kühleren Bereiche des Wasserspeichers 6 abgegeben. Ohne Gefahr einer Rückkühlung des Speicherwassers wird so ein hoher Nutzungsgrad der Solaranlage sicherstellt.

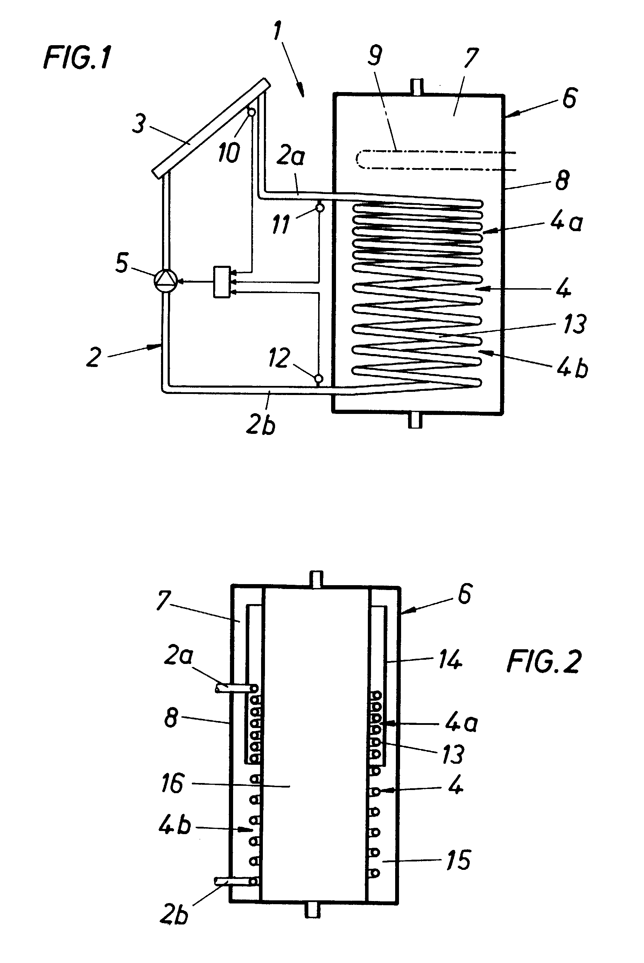

Um die Schichtungstendenz des Speicherwassers zu verbessern, kann, wie in Fig. 2 angedeutet, der obere Tauscherteil 4a von einer zylindrischen Leitwand 14 umgeben sein, die sich nach oben bis in den Bereitschaftsraum 7 hinein erstreckt. Dadurch braucht der obere Tauscherteil 4a nur eine verhältnismäßig geringe Wassermenge aufzuwärmen, die dann sofort nach oben in den Bereitschaftsraum 7 hochströmt, was eine intensivere und höhere Aufheizung des Bereitschaftsraumes 7 erlaubt. Im dargestellten Ausführungsbeispiel ist der Wasserspeicher 6 als Pufferspeicher 15 für einen mittig eingesetzten Brauchwasserspeicher 16 ausgebildet, doch läßt sich eine solche Leitwand auch in einem Wasserspeicher, der beispielsweise unmittelbar als Brauchwasserspeicher Verwendung findet (Fig. 1), einsetzen, welche Leitwand dann innerhalb der Rohrschlangen des oberen Wärmetauschers verläuft.

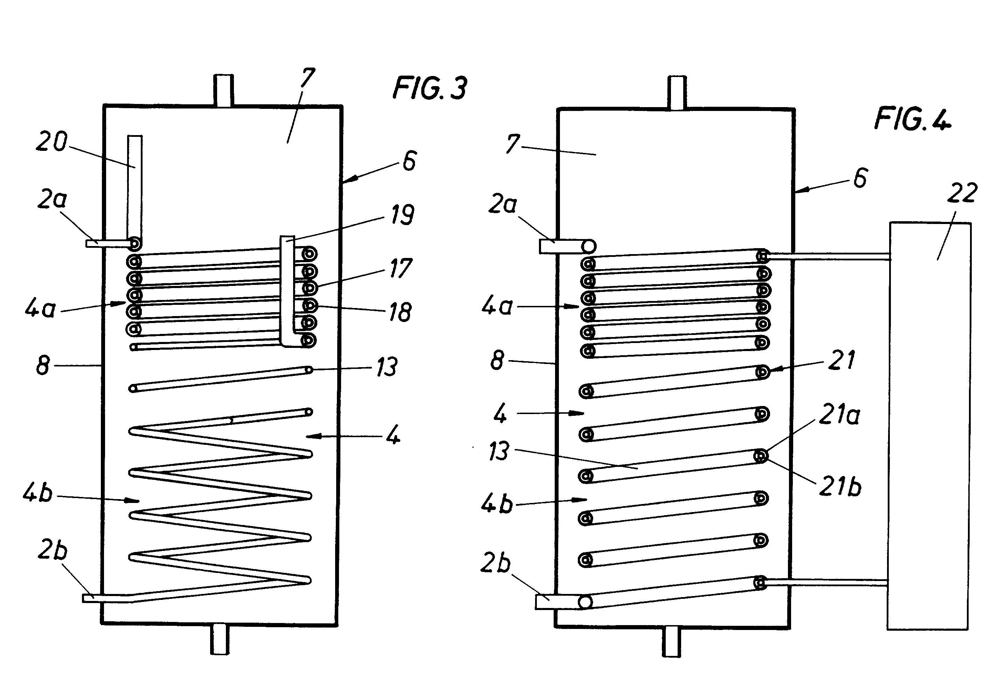

Gemäß dem Ausführungsbeispiel nach Fig. 3 ist zur Verbesserung des Schichtungseffektes die Rohrschlange 13 des oberen Tauscherteils 4a unter Freilassung eines Strömungskanals 18 von einem Leitrohr 17 umgeben, das eingangsseitig ein Zulaufrohr 19 und auslaufseitig ein Auslaufrohr 20 bildet. Das Einlaufrohr 19 führt vom unteren Grenzbereich des Bereitschaftsraumes 6 abwärts zum unteren Ende des oberen Tauscherteils 13 und das Auslaufrohr 20 erstreckt sich bis etwa 2/₃ in den Bereitschaftsraum 7 hinauf, so daß auch hier eine entsprechende Konvektionsströmung durch das Leitrohr entsteht, die zu einer intensiveren Aufwärmung des Bereitschaftsraumes 7 führt.

Wie in Fig. 4 angedeutet, kann der Wärmetäuscher 4 auch aus einem koaxialen Doppelrohr 21 bestehen, wobei der Wärmeträgerkreislauf 2 an das eine Teilrohr 21a und ein weiterer, nur angedeuteter Heizkreislauf 22 an das andere Teilrohr 21b angeschlossen sind. Hier kommt es zu einer Wechselwirkung zwischen den beiden Heizkreisläufen und dem Speichervolumen, was bedarfsweise zu einer Wirkungsgradsteigerung führen kann.

## Patentansprüche

1. Heizanlage (1), insbesondere Solaranlage, mit einem über eine Wärmequelle (3) führenden Wärmeträgerkreislauf (2) und einem Wasserspeicher (6), wobei der Wärmeträgerkreislauf (2) eine Umwälzpumpe (5) und einen im Speicherbehälter (8) sich der Höhe nach erstreckenden, von oben nach unten durchströmten Wärmetauscher (4) umfaßt und der Speicherbehälter (8) oberhalb des Wärmetauschers (4) einen Bereitschaftsraum (7) aufweist, dadurch gekennzeichnet, daß der Wärmetauscher (4) in wenigstens zwei Höhenabschnitte unterteilt ist und einen oberen Tauscherteil (4a) größerer spezifischer Leistung und einen unteren Tauscherteil (4b) kleinerer spezifischer Leistung bildet und daß die Umwälzpumpe (5) in Abhängigkeit von der Differenz zwischen Kollektortemperatur und Wärmetauscher-Rücklauftemperatur ein- und ausschaltbar und vorzugsweise im Sinne einer Drehzahlregelung in Abhängigkeit von der Wärmetauscher-Vorlauftemperatur ansteuerbar ist.

2. Heizanlage nach Anspruch 1, dadurch gekennzeichnet, daß sich der obere Tauscherteil (4a) höchstens über ein Höhensechstel des Speicherbehälters (8) erstreckt und etwa die Hälfte der gesamten Wärmetauscherfläche des Wärmetauschers (4) besitzt, wobei vorzugsweise der Bereitschaftsraum (7) zumindest das oberste Höhendrittel des Speicherbehälters (8) einnimmt.

3. Heizanlage nach Anspruch 1 oder 2, dadurch gekennzeichnet, daß der Wärmetauscher (4) aus einer schraubenlinienförmig gewundenen Rohrschlange (13) besteht, deren Windungshöhe im oberen Tauscherteil (4a) kleiner als im unteren Tauscherteil (4b) ist.

4. Heizanlage nach Anspruch 3, dadurch gekennzeichnet, daß der Flächeninhalt der Querschnittsfläche innerhalb der Windungen etwa dem der außerhalb der Windungen verbleibenden Querschnittsfläche gleicht.

5. Heizanlage nach Anspruch 1 oder 2, dadurch gekennzeichnet, daß der Wärmetauscher aus einer Rohrschlange (13) besteht, die im oberen Tauscherteil (4a) über den Behälterquerschnitt spiralig und im unteren Tauscherteil (4b) über die Behälterhöhe schraubenlinienförmig gewunden ist.

6. Heizanlage nach einem der Ansprüche 1 bis 5, dadurch gekennzeichnet, daß eine den oberen Tauscherteil (4a) umgebende zylindrische Leitwand (14) vorgesehen ist, die sich bis in den Bereitschaftsraum (7) hinauf erstreckt.

7. Heizanlage nach einem der Ansprüche 3 bis 5, dadurch gekennzeichnet, daß die Rohrschlange (13) des oberen Tauscherteiles (4a) unter Freilassung eines Strömungskanals (17) mit einem Leitrohr (18) umgeben ist, das am unteren Ende in ein sich bis zum unteren Grenzbereich des Bereitschaftsraumes (7) erstreckendes Zulaufrohr (19) und am oberen Ende in ein in den Bereitschaftsraum (7) hochragendes Auslaufrohr (20) übergeht.

8. Heizanlage nach einem der Ansprüche 3 bis 5, dadurch gekennzeichnet, daß die Rohrschlange (13) des Wärmetauschers (4) aus einem Doppelrohr (21) besteht, wobei das eine Teilrohr (21a) an den Wärmeträgerkreislauf (2) und das andere Teilrohr (21b) an einen eigenen Heizkreislauf (22) angeschlossen sind.

9. Heizanlage nach einem der Ansprüche 1 bis 8, dadurch gekennzeichnet, daß der Speicherbehälter (8) als Pufferspeicher (15) für einen Brauchwasserspeicher (16) dient, wobei der Wärmetauscher (4) im Ringraum zwischen Brauchwasserspeicher und Speicherbehälter verlegt ist.

## Claims

1. A heating system (1), more particularly a solar heating system, comprising a water reservoir (6) and a heat transfer medium circuit (2) extending through a heat source (3), the heat transfer medium circuit (2) comprising a circulating pump (5) and a heat exchanger (4) which extends vertically in the reservoir container (8) and through which a downward flow occurs, and the reservoir container (8) comprises a standby chamber (9) above the heat exchanger (4), characterised in that the heat exchanger (4) is divided into at least two vertical portions comprising an upper part (4a) having a greater specific capacity and a lower part (4b) having a smaller specific capacity and in that the circulating pump (5) can be switched on and off in dependence on the difference between the collector temperature and the heat-exchanger return temperature and is preferably so actuated as to control the speed in dependence on the heat exchanger flow temperature.

2. A heating system according to claim 1, characterised in that the upper part (4a) of the exchanger extends at most over a sixth of the height of the reservoir container (8) and occupies about half the total area of the heat exchanger (4), and preferably the standby chamber (7) occupies at least the top third of the reservoir container (8).

3. A heating system according to claim 1 or 2, characterised in that the heat exchanger (4) comprises a helical pipe coil (13), the height of the turns of the helix in the upper part (4a) of the heat exchanger being less than in the lower part (4b).

4. A heating system according to claim 3, characterised in that the area of the cross-sectional surface inside the turns is approximately equal to the cross-sectional area outside the turns.

5. A heating system according to claim 1 or 2, characterised in that the heat exchanger comprises a pipe coil (13) which is wound in a spiral across the container cross-section in the upper part (4a) of the exchanger and in a helix over the container height in the lower part (4b) of the exchanger.

6. A heating system according to any of claims 1 to 5, characterised in that a cylindrical guide wall (14) surrounding the upper part (4a) of the exchanger is provided and extends up to the standby chamber (7).

7. A heating system according to any of claims 3 to 5, characterised in that the pipe coil (13) in the upper part (4a) of the exchanger is surrounded, leaving a flow channel (17) free, by a guide tube (18) which at the bottom end merges into a feed pipe (19) extending as far as the lower boundary region of the standby chamber (7) whereas its upper end merges into an outlet pipe (20) extending up into the standby chamber (7).

8. A heating system according to any of claims 3 to 5, characterised in that the pipe coil (13) in the heat exchanger (4) comprises a double pipe (21), one part (21a) of which is connected to the heat transfer medium circuit (2) and the other part (21b) is connected to a separate heating circuit (22).

9. A heating system according to any of claims 1 to 8, characterised in that the reservoir container (8) is a buffer reservoir (15) for a service-water reservoir (16), the heat exchanger (4) being disposed in the annular space between the service-water reservoir and the reservoir container.

## Revendications

1. Installation de chauffage (1) en particulier de chauffage solaire, avec un circuit caloporteur (2), passant par une source de chaleur (3), et un accumulateur à eau (6), le circuit caloporteur (2) comprenant une pompe de circulation (5) et un échangeur de chaleur traversé par un écoulement allant de haut en bas, s'étendant en hauteur dans le récipient accumulateur (8), et le récipient accumulateur (8) présentant, au-dessus de l'échangeur de chaleur (4), un espace de préparation (7), caractérisée en ce que l'échangeur de chaleur (4) est subdivisé en au moins deux tronçons de hauteur et constitue une partie échangeuse supérieure (4a) ayant une performance spécifique supérieure et une partie échangeuse inférieure (4b) ayant une performance spécifique inférieure et en ce que la pompe de circulation (5) est susceptible d'être mis en service et hors service en fonction de la différence entre la température au collecteur et la température de retour de l'échangeur de chaleur, et est susceptible d'être commandée, de préférence dans le sens d'une régulation de la vitesse de rotation, en fonction de la température aller ou d'alimentation de l'échangeur de la chaleur.

2. Installation de chauffage selon la revendication 1, caractérisée en ce que la partie échangeuse supérieure (4a) s'étend au plus haut sur un sixième de la hauteur du récipient accumulateur (8) et dispose d'environ la moitié de la totalité de la surface d'échange thermique de l'échangeur de chaleur (4), de préférence l'espace de disponibilité (7) prenant au moins le tiers supérieur de la hauteur du récipient accumulateur (8).

3. Installation de chauffage selon la revendication 1 ou 2, caractérisée en ce que l'échangeur de chaleur (4) est constitué d'un serpentin tubulaire (13) enroulé en forme d'hélicoïde, dont la hauteur d'enroulement dans la partie échangeuse supérieure (4a) est inférieure à ce qu'elle est dans la partie échangeuse inférieure (4b).

4. Installation de chauffage selon la revendication 3, caractérisée en ce que l'aire de la surface de la section transversale délimitée à l'intérieur des enroulements est à peu près égale à celle de la surface de la section transversale subsistant à l'extérieur des enroulements.

5. Installation de chauffage selon la revendication 1 ou 2, caractérisée en ce que l'échangeur de chaleur est constitué d'un serpentin tubulaire (13) qui est enroulé dans la partie échangeuse supérieure (4a) en spirale sur la section transversale du récipient et est enroulé sous une forme hélicoïde dans la partie échangeuse inférieure (4b), sur la hauteur du récipient.

6. Installation de chauffage selon l'une des revendications 1 à 5, caractérisée en ce qu'est prévue une paroi directrice (14) cylindrique, entourant la partie échangeuse supérieure (4a), s'étendant jusqu'à l'espace de disponibilité (7).

7. Installation de chauffage selon l'une des revendications 3 à 5, caractérisée en ce que le serpentin tubulaire (13) de la partie échangeuse supérieure (4a) est entouré, en laissant subsister un canal d'écoulement (17), par un tube directeur (18) qui se transforme, à l'extrémité inférieure, en un tube d'amenée (19) s'étendant jusqu'à la zone limite inférieure de l'espace de disponibilité (7) et se transforme, à l'extrémité supérieure, en l'espace de disponibilité (7) du tube de sortie (20) montant.

8. Installation de chauffage selon l'une des revendications 3 à 5, caractérisée en ce que le serpentin tubulaire (13) de l'échangeur de chaleur (4) est constitué d'un tube double (21), un tube partiel (21a) étant raccordé au circuit caloporteur (2) et l'autre tube partiel (21b) étant raccordé à un circuit de chauffage propre (22).

9. Installation de chauffage selon l'une des revendications 1 à 8, caractérisée en ce que le récipient accumulateur (8) sert d'accumulateur tampon (15) pour un accumulateur d'eau industrielle (16), l'échangeur de chaleur (4) étant installé dans l'espace annulaire existant entre l'accumulateur d'eau industrielle et le récipient accumulateur.
